# EUROPEAN PATENT APPLICATION

(11) **EP 4 837 931 A1**
(43) Date of publication of application: **11.11.2026**
(21) Application number: 24923099.6
(22) Date of filing: 11.03.2024
(51) Int. Cl.: C08G 18/66, C08G 18/42, C08G 18/34, C08G 18/32, C08G 18/44, C08G 18/48, A41D 19/00

(54) **POLYURETHANE-POLYUREA AQUEOUS DISPERSION, PREPARATION METHOD THEREFOR AND USE THEREOF, SLURRY, METHOD FOR PREPARING POLYURETHANE GLOVE, AND POLYURETHANE GLOVE**

(30) Priority: 05.02.2024 CN 202410166280
(71) Applicant: Bluesail Medical Co., Ltd., Zibo, Shandong 255411 (CN); Wanhua Chemical Group Co., Ltd., Yantai, Shandong 265505 (CN)
(72) Inventor: LIU, Xiaoxing, Zibo, Shandong 255411 (CN); WANG, Zhen, Chongqing Rd., YEDA Yantai, Shandong 265505 (CN); LIU, Hongming, Zibo, Shandong 255411 (CN); ZHANG, Xu, Chongqing Rd., YEDA Yantai, Shandong 265505 (CN); JIN, Yunquan, Chongqing Rd., YEDA Yantai, Shandong 265505 (CN); ZHANG, Haiqi, Zibo, Shandong 255411 (CN)
(74) Representative: Viering, Jentschura & Partner mbB Patent- und Rechtsanwälte
(86) International application number: PCT/CN2024/080903
(87) International publication number: WO 2025/166871

(57) **Abstract**

A polyurethane-polyurea aqueous dispersion, a method for preparing the polyurethane-polyurea aqueous dispersion, a use of the polyurethane-polyurea aqueous dispersion, a slurry containing the polyurethane-polyurea aqueous dispersion, a polyurethane glove and a preparation method therefor. The polyurethane-polyurea aqueous dispersion comprises polyurethane-polyurea having a terminal polycarboxylic acid and/or carboxylate group dispersed in water. The present disclosure effectively reduces the destructive effect of metal ions such as calcium ions from coagulant solutions on dopes containing polyurethane-polyurea aqueous dispersions for preparing gloves, thereby prolonging the service life of the dopes; moreover, the produced gloves have excellent mechanical properties, e.g., improved elongations and excellent tensile strength.

## Description

The present application claims priority to Chinese Patent Application No. 202410166280.7 filed on February 5, 2024, the disclosure of the above-mentioned Chinese patent application is incorporated herein by reference in its entirety as a part of the present application.

### TECHNICAL FIELD

Embodiments of the present disclosure relate to a polyurethane-polyurea aqueous dispersion, a preparation method of the polyurethane-polyurea aqueous dispersion and a use, a slurry comprising the polyurethane-polyurea aqueous dispersion, and a polyurethane glove and a preparation method thereof.

### BACKGROUND

Aqueous polyurethane gloves have the advantages of being non-toxic and odorless, having a simple production process, and are a hotspot of current research on disposable gloves. Because the preparation method of aqueous polyurethane is different from those of nitrile and latex, it determines that the preparation process of aqueous polyurethane gloves is quite different from those of nitrile and latex, especially regarding the stability of the compound containing the polyurethane aqueous dispersion used in the glove preparation process.

Flocculation-method aqueous polyurethane gloves generally involve dipping a glove former in a coagulant solution, and then dipping in a compound containing the polyurethane aqueous dispersion. The coagulant solution used in the flocculation method contains high-valence electrolyte salts, such as salts containing calcium ions, magnesium ions, and aluminum ions; during use, metal ions inevitably migrate into the compound, causing changes in the stability of the compound, which can become jelly-like in severe cases and unusable. Therefore, how to improve the running time (service life) of the compound determines whether the polyurethane gloves can achieve large-scale continuous production.

Therefore, there still exists a need in the art: to provide a method capable of effectively reducing the migration of metal ions from the coagulant solution into the compound containing the polyurethane aqueous dispersion used for preparing gloves, so that the compound has a longer life, thereby enabling large-scale continuous production of gloves, while the prepared gloves have excellent mechanical properties.

### SUMMARY

Embodiments of the present disclosure at least provide a polyurethane-polyurea aqueous dispersion, a method for preparing the polyurethane-polyurea aqueous dispersion, a use of the polyurethane-polyurea aqueous dispersion, a slurry, a method for preparing a polyurethane glove, and a polyurethane glove.

In a first aspect, embodiments of the present disclosure provide a polyurethane-polyurea aqueous dispersion comprising a polyurethane-polyurea having terminal polycarboxylic acid and/or carboxylate groups dispersed in water.

In an optional embodiment, relative to the total weight of the polyurethane-polyurea, the content of the terminal polycarboxylic acid and/or carboxylate groups is 7-30 mmol/100g, for example 9 to 27 mmol/100g.

In an optional embodiment, the polyurethane-polyurea is prepared by reacting starting materials comprising the following components:
Component a: one or more polyether or polyester polyols, the number average molecular weight of the polyether or polyester polyols being 500 g/mol or more;
Component b: one or more polyisocyanates;
Component c: one or more hydrophilic compounds, the hydrophilic compounds containing 2-3 groups having reactivity with NCO, the hydrophilic groups of the hydrophilic compounds including ionic groups and/or latent ionic groups;
Optional component d: one or more alcohol chain extenders different from component a, having a number average molecular weight of 300 g/mol or less;
Component e: one or more compounds that ionize the latent ionic groups in component c, having the structural formula R₁R₂R₃N, wherein R₁-R₃ are the same or different from each other, and are each independently selected from H, or unsubstituted or OH-substituted C1-C6 alkyl, C2-C6 alkenyl, C2-C6 alkynyl, or C5-C6 cycloalkyl;
Component f: one or more polyamines containing at least two amine groups selected from primary amine groups and/or secondary amine groups, having a number average molecular weight of 500 g/mol or less;
Component g: one or more compounds reactive with isocyanate, containing a single amine group selected from primary amine groups or secondary amine groups or a hydroxyl group, and containing multiple carboxyl groups;
wherein the terminal polycarboxylic acid and/or carboxylate groups in the polyurethane-polyurea are introduced by component g.

In an optional embodiment, among the starting materials of the polyurethane-polyurea aqueous dispersion,
- the component a is one or more of diols, triols, and tetraols, preferably diols, preferably the number average molecular weight of component a is 500 to 6000 g/mol, for example 500 to 5000 g/mol; and/or
- the component b is one or more of aromatic, aliphatic, and alicyclic polyisocyanates having at least two, preferably two isocyanate groups; and/or
- the component c is one or more selected from dimethylolpropionic acid, dimethylolbutyric acid, and aminosulfonates, more preferably dimethylolpropionic acid; and/or
- the component d is selected from one or more of ethylene glycol, 1,2-propanediol, 1,3-propanediol, 1,4-butanediol, 1,3-butanediol, 2,3-butanediol, 1,5-pentanediol, 1,6-hexanediol, neopentyl glycol, 1,4-dihydroxycyclohexane, 1,4-dimethylolcyclohexane, 1,8-octanediol, 1,10-decanediol, 1,12-dodecanediol, neopentyl glycol, 1,4-cyclohexanediol, 1,4-cyclohexanedimethanol and 2-ethyl-1.3-hexanediol; preferably component d is selected from one or more of 1,2-propanediol, 1,3-propanediol, 1,4-butanediol, 1,3-butanediol, neopentyl glycol and 1,4-cyclohexanedimethanol; and/or
- the component e is an organic tertiary amine, for example triethylamine, dimethylethanolamine, triisopropylamine, or ammonia, preferably component e is triethylamine; and/or
- the component f is a polyamine having a number average molecular weight of 60~500 g/mol, preferably component f is selected from one or more of ethylenediamine, 1,2-diaminopropane, 1,4-diaminobutane, 1,6-hexanediamine, 2-methyl-1,5-diamine, isophoronediamine, 4,4-diaminodicyclohexylmethane, piperazine and diethylenetriamine, more preferably component f is ethylenediamine and/or isophoronediamine; and/or
- the component g has a carboxyl number of 2 or more, for example 3 or more, preferably component g is ethylenediaminetriacetic acid.

In an optional embodiment, based on the total weight of components a-g being 100%, the proportions by weight of components a-g are as follows:
Component a: 72-85 wt%;
Component b: 10-23 wt%;
Component c: 1.5-4 wt%;
Component d: 0-3 wt%;
Component e: 0.1-3 wt%;
Component f: 0-3 wt%;
Component g: 0.4-2.5 wt%.

In an optional embodiment, the content of the polyurethane-polyurea in the polyurethane-polyurea aqueous dispersion is 35 wt% or more, based on the total weight of the polyurethane-polyurea aqueous dispersion.

In a second aspect, embodiments of the present disclosure provide a method for preparing the polyurethane-polyurea aqueous dispersion of the first aspect of the present disclosure, the preparation method comprising preparing the polyurethane-polyurea by:
reacting a prepolymer containing terminal isocyanate groups, preferably at least two terminal isocyanate groups, with a polyamine containing at least two amine groups selected from primary amine groups and/or secondary amine groups, and with a compound reactive with isocyanate, containing a single amine group selected from primary amine groups or secondary amine groups or a hydroxyl group, and containing multiple carboxyl groups.

In an optional embodiment, the preparation method comprises the following steps:
- reacting component a, component b, component c, optional component d in a first inert solvent to obtain a prepolymer containing terminal isocyanate groups, preferably at least two terminal isocyanate groups;
- optionally adding a second inert solvent for dilution;
- adding component e for neutralization, then adding water and uniformly dispersing to obtain a dispersion containing inert solvent;
- adding components f and g to the dispersion containing inert solvent and continuing the reaction;
- removing the inert solvent to obtain a polyurethane-polyurea aqueous dispersion free of inert solvent;
- optionally, converting the terminal carboxyl groups in the polyurethane-polyurea into carboxylate groups,
wherein the second inert solvent is the same as or different from the first inert solvent.

In an optional embodiment, the step of converting the terminal carboxyl groups in the polyurethane-polyurea into carboxylate groups is carried out by: adding an alkaline compound to the polyurethane-polyurea aqueous dispersion free of inert solvent, the alkaline compound preferably being an alkali metal compound, more preferably sodium hydroxide and/or sodium carbonate.

In a third aspect, embodiments of the present disclosure provide a use of the polyurethane-polyurea aqueous dispersion of the first aspect of the present disclosure, or the polyurethane-polyurea aqueous dispersion prepared by the method of the second aspect of the present disclosure, for preparing a slurry for flocculation-method aqueous polyurethane gloves, or for preparing polyurethane gloves.

In a fourth aspect, embodiments of the present disclosure provide a slurry comprising the polyurethane-polyurea aqueous dispersion of the first aspect of the present disclosure, or the polyurethane-polyurea aqueous dispersion prepared by the method of the second aspect of the present disclosure, a crosslinking agent, an optional ion chelating agent, and optionally additional water.

In an optional embodiment, the crosslinking agent comprises one or more of polyfunctional aziridine, carbodiimide, amino resin, and sorbitol polyglycidyl ether;
and/or, the ion chelating agent comprises one or more of sodium gluconate, sodium tartrate, disodium ethylenediaminetetraacetate, and sodium diethylenetriaminepentaacetate;
preferably, the weight ratio of the polyurethane-polyurea aqueous dispersion, crosslinking agent, ion chelating agent and the additional water is 100 : 0.3~1.2 : 0.01~0.5 : 100~200.

In a fifth aspect, embodiments of the present disclosure provide a method for preparing a polyurethane glove comprising a polyurethane layer, the method comprising a step of preparing the polyurethane layer using the slurry of the fourth aspect of the present disclosure.

In an optional embodiment, the method comprises the following steps:
S1: dipping an optionally cleaned hand former in a coagulant solution, optionally drying thereafter, to obtain a first-treated hand former;
S2: dipping the first-treated hand former in the slurry of any one of claims 11-12, optionally drying thereafter; optionally repeating this dipping and drying process one or more times to obtain a second-treated hand former;
S3: optionally, cleaning the second-treated hand former with water, optionally drying thereafter, to obtain a third-treated hand former;
S4: optionally, dipping the second-treated hand former or the third-treated hand former in a slip coating liquid;
S5: beading, plasticizing, demolding, to obtain a polyurethane glove.

In an optional embodiment, the coagulant solution comprises a soluble salt, a release agent, and water;
preferably, the soluble salt is selected from one or more of calcium nitrate, calcium chloride, magnesium nitrate, magnesium chloride, zinc nitrate and zinc chloride;
preferably, the weight ratio of the soluble salt, release agent, and water is 15~30 : 8~20 : 150~250;
and/or, the slip coating liquid comprises one or more of PU coating, acrylic coating, corn starch coating, and talcum powder coating;
and/or, the dipping and drying process in step S2 is performed at least twice, and the drying in step S2 is baking; preferably, the baking temperature is 80-150°C, preferably 90~140°C;
and/or, the plasticizing in step S5 is performed by baking at a temperature of 110~140°C for 20~40 min.

In a sixth aspect, embodiments of the present disclosure provide a polyurethane glove comprising a polyurethane layer prepared using the slurry of the fourth aspect of the present disclosure as a starting material, preferably the glove obtained by the method of the fifth aspect of the present disclosure.

### DETAILED DESCRIPTION

To make the purposes, technical solutions and advantages of the embodiments of the present disclosure clearer, the technical solutions of the embodiments of the present disclosure will be clearly and completely described below. Obviously, the described embodiments are a part of the embodiments of the present disclosure, rather than all the embodiments. Based on the described embodiments of the present disclosure, all other embodiments obtained by those of ordinary skill in the art without creative labor fall within the protection scope of the present disclosure.

Unless otherwise specified, the meanings of the scientific and technical terms in this specification are the same as those generally understood by those skilled in the art.

Relational terms such as "first" and "second" are merely used to distinguish one element, component or method step from another with the same name, and do not necessarily require or imply any such actual relationship or order among these elements, components or method steps.

In the present disclosure, when the expressions "above" or "below" are used in describing numerical values, for example "... or above (below)", the terms "above" and "below" mean including the stated numerical value itself.

In the present disclosure, the terms "polyurethane-polyurea", "polyurethane-polyurea copolymer" and "polyurethane-polyurea polymer" have the same meaning, they all refer to a copolymer containing urethane structural units and urea structural units and are used interchangeably, and are sometimes also simply referred to as "polyurethane".

In the present disclosure, the term "compound" means a compound containing a polyurethane-polyurea aqueous dispersion used for preparing gloves.

The present disclosure relates to a polyurethane-polyurea aqueous dispersion, a preparation method and use of the polyurethane-polyurea aqueous dispersion, a slurry comprising the polyurethane-polyurea aqueous dispersion, and a polyurethane glove and a preparation method thereof.

The present disclosure will be specifically described below.

### Polyurethane-polyurea aqueous dispersion

In a first aspect, the present disclosure provides a polyurethane-polyurea aqueous dispersion comprising a polyurethane-polyurea having terminal polycarboxylic acid and/or carboxylate groups dispersed in water.

In a preferred embodiment, relative to the total weight of the polyurethane-polyurea, the content of the terminal polycarboxylic acid and/or carboxylate groups is 7.0-30 mmol/100g, preferably 9 to 27 mmol/100g, for example, can be 7, 8, 9, 10, 11, 12, 13, 14, 15, 16, 17, 18, 19, 20, 21, 22, 23, 24, 25, 26, 27, 28, 29, 30 mmol/100g.

In the present disclosure, unless otherwise specified, the stated content of the terminal polycarboxylic acid and/or carboxylate groups is relative to the total weight of the polyurethane-polyurea.

In a preferred embodiment, the polyurethane-polyurea can be prepared by reacting starting materials comprising the following components:
Component a: one or more polyether or polyester polyols, the number average molecular weight of the polyether or polyester polyols being 500 g/mol or more;
Component b: one or more polyisocyanates;
Component c: one or more hydrophilic compounds, the hydrophilic compounds containing 2-3 groups having reactivity with NCO, the hydrophilic groups of the hydrophilic compounds including ionic groups and/or latent ionic groups;
Optional component d: one or more alcohol chain extenders different from component a, having a number average molecular weight of 300 g/mol or less;
Component e: one or more compounds that ionize the latent ionic groups in component c, having the structural formula R₁R₂R₃N, wherein R₁-R₃ are the same or different from each other, and are each independently selected from H, or unsubstituted or OH-substituted C1-C6 alkyl, C2-C6 alkenyl, C2-C6 alkynyl, or C5-C6 cycloalkyl;
Component f: one or more polyamines containing at least two amine groups selected from primary amine groups and/or secondary amine groups, having a number average molecular weight of 500 g/mol or less;
Component g: one or more compounds reactive with isocyanate, containing a single amine group selected from primary amine groups or secondary amine groups or a hydroxyl group, and containing multiple carboxyl groups;
wherein the terminal polycarboxylic acid and/or carboxylate groups in the polyurethane-polyurea are introduced by component g.

### Component a

In embodiments of the present disclosure, component a is one or more polyether or polyester polyols.

The hydroxyl functionality of component a can be selected as desired. In a preferred embodiment, component a is one or more of diols, triols and tetraols. In a further preferred embodiment, the component a is a diol.

The number average molecular weight of component a can be selected as desired. In a preferred embodiment, the number average molecular weight of component a can be 500 g/mol or more, for example 500 to 6000 g/mol, for example 500 to 5000 g/mol, for example the number average molecular weight of component a can be 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, 4000, 4100, 4200, 4300, 4400, 4500, 4600, 4700, 4800, 4900, 5000, 5100, 5200, 5300, 5400, 5500, 5600, 5700, 5800, 5900, 6000 g/mol, or a range defined by any two thereof.

The number average molecular weight can be tested by conventional means in the art, such as Gel Permeation Chromatography (GPC) method, hydroxyl value (mg KOH/g) titration method. Hereinafter, unless otherwise specified, the number average molecular weight refers to the number average molecular weight measured by titration method.

As non-limiting examples of polyether polyols usable in the present disclosure, mention can be made of polyether polyols formed from one or more of ethylene oxide, propylene oxide, butylene oxide. When it is desired to use polyether polyols as triols or tetraols, they can be obtained by using a triol (for example glycerol) or a tetraol (for example pentaerythritol) as initiator to initiate the ring-opening polymerization of one or more of ethylene oxide, propylene oxide, butylene oxide.

As non-limiting examples of polyester polyols usable in the present disclosure, mention can be made of polyester polyols formed by polymerizing one or more dibasic acids with one or more diols, and polyester polyols formed by polymerizing one or more dibasic acids with one or more diols and optionally one or more tri- or higher-basic acids and optionally one or more tri- or higher-hydric alcohols.

Non-limiting examples of diols include: 1,2-ethylene glycol, 1,2-propanediol, 1,3-propanediol, 1,2-butanediol, 1,3-butanediol, 1,4-butanediol, tetrahydrofuran, 1,2-pentanediol, 1,3-pentanediol, 1,4-pentanediol, 1,5-pentanediol, 1,2-hexanediol, 1,3-hexanediol, 1,4-hexanediol, 1,5-hexanediol, 1,6-hexanediol, 1,2-heptanediol, 1,3-heptanediol, 1,4-heptanediol, 1,5-heptanediol, 1,6-heptanediol, 1,7-heptanediol, octanediol, nonanediol, decanediol, cyclopentanediol, cyclohexanediol, etc.

Non-limiting examples of tri- or higher-hydric alcohols include, for example, glycerol, pentaerythritol, etc.

Non-limiting examples of dibasic acids include: malonic acid, succinic acid, glutaric acid, adipic acid, pimelic acid, suberic acid, azelaic acid, sebacic acid, undecanedioic acid, dodecanedioic acid, terephthalic acid, phthalic acid, isophthalic acid, cyclohexanedicarboxylic acid, etc.

Non-limiting examples of tri- or higher-basic acids include, for example, trimesic acid, pyromellitic acid, etc.

### Component b

In a preferred embodiment of the present disclosure, the component b is one or more of aromatic, aliphatic, and alicyclic polyisocyanates having at least two, preferably two isocyanate groups.

The isocyanate group functionality of component b can be selected as desired. For example, the isocyanate group functionality of component b can be 2, 3, 4 or higher.

As non-limiting examples of aromatic polyisocyanates, mention can be made of diphenylmethane diisocyanate (MDI), toluene diisocyanate (TDI), naphthalene diisocyanate, p-phenylene diisocyanate, xylylene diisocyanate, 1,3-bis(1-isocyanato-1-methylethyl)benzene, dimethylbiphenyl diisocyanate, polymethylene polyphenyl isocyanate, etc.

As non-limiting examples of alicyclic polyisocyanates, mention can be made of 4,4'-dicyclohexylmethane diisocyanate (HMDI), 1,4-cyclohexane diisocyanate, cyclohexanedimethylene diisocyanate, trimethyl-1,6-hexamethylene diisocyanate (for example 2,2,4-trimethyl-1,6-hexamethylene diisocyanate, 2,4,4-trimethyl-1,6-hexamethylene diisocyanate and mixtures thereof), norbornane diisocyanate (for example 2,5-bis(isocyanatomethyl)bicyclo[2.2.1]heptane, 2,6-bis(isocyanatomethyl)bicyclo[2.2.1]heptane, or mixtures thereof), methylcyclohexyl diisocyanate and isophorone diisocyanate (IPDI).

As non-limiting examples of aliphatic polyisocyanates, mention can be made of hexamethylene diisocyanate HDI.

### Component c

In embodiments of the present disclosure, component c is a hydrophilic compound, the hydrophilic compound containing 2-3 groups having reactivity with NCO, the hydrophilic groups of the hydrophilic compound including ionic groups and/or latent ionic groups.

In the context of the present disclosure, ionic groups refer to groups that themselves carry a charge. Non-limiting examples of ionic groups are carboxylate groups.

In the context of the present disclosure, latent ionic groups refer to groups that can be converted into ionic groups by chemical reaction. The chemical reaction can be an acid-base neutralization reaction or a protonation reaction. Non-limiting examples of latent ionic groups are carboxylic acid groups.

In a preferred embodiment, component c can be one or more of dimethylolpropionic acid, dimethylolbutyric acid, and aminosulfonates, more preferably dimethylolpropionic acid.

### Component d

Component d is an alcohol chain extender different from component a, its Mn being 300 or less. For example, the Mn of component d can be any of the following values or within a range defined by any two thereof: 300, 290, 280, 270, 260, 250, 240, 230, 220, 210, 200, 190, 180, 170, 160, 150, 140, 130, 120, 110, 100, 90, 80, 70, or 60.

As non-limiting examples of component d, mention can be made of: one or more of ethylene glycol, 1,2-propanediol, 1,3-propanediol, 1,4-butanediol, 1,3-butanediol, 2,3-butanediol, 1,5-pentanediol, 1,6-hexanediol, neopentyl glycol, 1,4-dihydroxycyclohexane, 1,4-dimethylolcyclohexane, 1,8-octanediol, 1,10-decanediol, 1,12-dodecanediol, neopentyl glycol, 1,4-cyclohexanediol, 1,4-cyclohexanedimethanol and 2-ethyl-1.3-hexanediol; preferably 1,2-propanediol, 1,3-propanediol, 1,4-butanediol, 1,3-butanediol, neopentyl glycol and 1,4-cyclohexanedimethanol, and any combination thereof.

### Component e

In the present disclosure, component e is a compound that ionizes the latent ionic groups in component c, having the structural formula R₁R₂R₃N, wherein R₁-R₃ are the same or different from each other, and are each independently selected from H, or unsubstituted or OH-substituted C1-C6 alkyl, C2-C6 alkenyl, C2-C6 alkynyl, or C5-C6 cycloalkyl.

As a non-limiting example, component e can be an organic tertiary amine, such as triethylamine, dimethylethanolamine, triisopropylamine, or component e can be ammonia, more preferably component e can be volatile triethylamine.

### Component f

In the present disclosure, component f is a polyamine containing at least two amine groups selected from primary amine groups and/or secondary amine groups, having a Mn of 500 g/mol or less, for example 60~500 g/mol. For example, the Mn of component f can be 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500 g/mol, or a range defined by any two thereof.

The polyamine has at least two amine groups selected from primary amine groups and/or secondary amine groups, for example, the amine groups can all be primary amine groups, all be secondary amine groups, or at least one thereof is a primary amine group and at least one is a secondary amine group.

As non-limiting examples of component f, mention can be made of: ethylenediamine, 1,2-diaminopropane, 1,4-diaminobutane, 1,6-hexanediamine, 2-methyl-1,5-diamine, isophoronediamine, 4,4-diaminodicyclohexylmethane, piperazine and diethylenetriamine or any combination thereof. More preferably, component f can be ethylenediamine and/or isophoronediamine.

### Component g

In the present disclosure, component g is one or more compounds reactive with isocyanate, containing a single amine group selected from primary amine groups or secondary amine groups or a hydroxyl group, and containing multiple carboxyl groups.

In one embodiment of the present disclosure, the carboxyl number of the component g is 2 or more, for example 3 or more.

As a non-limiting example of component g, mention can be made of ethylenediaminetriacetic acid.

In embodiments of the present disclosure, based on the total weight of components a-g being 100 wt%, the proportions by weight of components a-g are as follows:
The content of component a can be 72-85 wt%, for example 73, 74, 75, 76, 77, 78, 79, 80, 81, 82, 83, 84, 85 wt%, or a range defined by any two thereof;
The content of component b can be 10-23 wt%, for example 11, 12, 13, 14, 15, 16, 17, 18, 19, 20, 21, 22, 23 wt%, or a range defined by any two thereof;
The content of component c can be 1.5-4 wt%, for example 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0 wt%, or a range defined by any two thereof;
The content of component d can be 0-3 wt%, for example 0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0 wt%, or a range defined by any two thereof;
The content of component e can be 0.1-3 wt%, for example 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0 wt%, or a range defined by any two thereof;
The content of component f can be 0 to 3 wt, for example 0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0 wt%, or a range defined by any two thereof;
The content of component g can be 0.4-2.5 wt%, for example 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5 wt%, or a range defined by any two thereof.

In one embodiment of the present disclosure, based on the total weight of the polyurethane-polyurea aqueous dispersion, the content of the polyurethane-polyurea in the aqueous dispersion is 35 wt% or more, for example can be 35, 40, 45, 50, 55, 60, 65, 70, 75, 80, 85, 90 wt%, or a range defined by any two thereof.

The particle size of the polyurethane-polyurea dispersed in the polyurethane-polyurea aqueous dispersion is not particularly limited, for example, it can be: less than 2 µm, for example 10 nm, 20 nm, 40 nm, 60 nm, 80 nm, 100 nm, 120 nm, 140 nm, 160 nm, 180 nm, 200 nm, 220 nm, 240 nm, 260 nm, 280 nm, 300 nm, 400 nm, 500 nm, 600 nm, 700 nm, 800 nm, 900 nm, 1000 nm, 1200 nm, 1400 nm, 1600 nm, 1800 nm, 2000 nm average particle size.

The particle size can be measured by methods well known to those skilled in the art. For example, the particle size can be measured by a laser particle size analyzer (for example commercially available from Malvern Company).

In the context of the present disclosure, unless otherwise specified, the terms "particle size", "particle diameter", "size", "particle dimension" are used interchangeably.

In the context of the present disclosure, unless otherwise specified, the term particle size refers to the volume average particle size Dᵥ50, i.e., in the volume cumulative distribution curve, the particle size of 50% by volume of the particles is higher than this particle size value, and the particle size of 50% by volume of the particles is lower than this particle size value.

The applicant found that when the polyurethane-polyurea polymer in the polyurethane-polyurea aqueous dispersion contains terminal polycarboxylic and/or carboxylate structures, the terminal polycarboxylic and/or carboxylate structures can effectively reduce the concentration of metal ions such as calcium ions from the coagulant solution accumulated in the compound containing the polyurethane-polyurea aqueous dispersion used for preparing gloves, thereby effectively reducing the damaging effect of metal ions such as calcium ions on the compound, extending the service life of the compound, and can simultaneously improve the mechanical properties of the produced gloves, for example, so that it has improved elongation and simultaneously has excellent tensile strength.

The polyurethane-polyurea copolymer also forms an aspect of the present disclosure. All the above descriptions regarding the polyurethane-polyurea copolymer in the polyurethane-polyurea aqueous dispersion are applicable to the polyurethane-polyurea copolymer. They will not be repeated here.

### Preparation Method of Polyurethane-polyurea Aqueous Dispersion

In a second aspect, the present disclosure provides a method for preparing the polyurethane-polyurea aqueous dispersion of the first aspect of the present disclosure, the preparation method comprising preparing the polyurethane-polyurea by:

reacting a polyurethane prepolymer containing terminal isocyanate groups, preferably at least two terminal isocyanate groups, with a polyamine containing at least two amine groups selected from primary amine groups and/or secondary amine groups, and with a compound reactive with isocyanate, containing a single amine group selected from primary amine groups or secondary amine groups or a hydroxyl group, and containing multiple carboxyl groups.

The amine groups contained in the polyamine containing at least two amine groups selected from primary amine groups and/or secondary amine groups can all be primary amine groups, or all be secondary amine groups, or at least one thereof is a primary amine group and at least one is a secondary amine group.

In a preferred embodiment, the preparation method comprises the following steps:
- reacting component a, component b, component c, optional component d in a first inert solvent to obtain a prepolymer containing terminal isocyanate groups, preferably at least two terminal isocyanate groups;
- optionally adding a second inert solvent for dilution;
- adding component e for neutralization, then adding water and uniformly dispersing to obtain a dispersion containing inert solvent;
- adding components f and g to the dispersion containing inert solvent and continuing the reaction;
- removing the inert solvent to obtain a polyurethane-polyurea aqueous dispersion free of inert solvent;
- optionally, converting the terminal carboxyl groups in the polyurethane-polyurea into carboxylate groups,
wherein the second inert solvent is the same as or different from the first inert solvent.

The descriptions regarding components a-g in the polyurethane-polyurea aqueous dispersion of the first aspect of the present disclosure above are all applicable here.

In the present disclosure, "inert solvent" refers to a solvent that does not react with the components used to prepare the polyurethane-polyurea.

The first inert solvent and the second inert solvent are not particularly limited. The first inert solvent and the second inert solvent can be the same or different. For example, the first inert solvent and the second inert solvent can each independently be an ester solvent, a ketone solvent. Non-limiting examples of the ester solvent include: esters formed from C1-C20 monocarboxylic acids and C1-C20 monohydric alcohols, for example ethyl acetate, methyl propionate, ethyl propionate, etc. Non-limiting examples of the ketone solvent include acetone, butanone (methyl ethyl ketone), pentanone, cyclopentanone, hexanone, cyclohexanone, etc.

The method of removing the solvent can be any method known to those skilled in the art. As a non-limiting example, the solvent can be removed by distillation under normal pressure or reduced pressure.

In the present disclosure, the terminal carboxyl groups in the polyurethane-polyurea can be converted into carboxylate groups by an alkaline compound. Preferably, the alkaline compound is an alkali metal compound.

As non-limiting examples of alkali metal compounds usable in the present disclosure, mention can be made of alkali metal hydroxides, alkali metal carbonates, alkali metal carboxylates, alkali metal nitrates, alkali metal sulfates, alkali metal halides, alkali metal pseudohalides, etc. In a preferred embodiment of the present disclosure, the alkali metal compound is an alkali metal hydroxide and/or an alkali metal carbonate. In a more preferred embodiment, the alkali metal compound is sodium hydroxide and/or sodium carbonate.

The alkali metal compound can be added directly to the polyurethane-polyurea aqueous dispersion free of inert solvent in solid form. Alternatively, the alkali metal compound can be added to the polyurethane-polyurea aqueous dispersion free of inert solvent in solution form.

The applicant found that by reacting a polyurethane prepolymer containing terminal isocyanate groups with a polyamine and a compound reactive with isocyanate, containing a single amine group selected from primary amine groups or secondary amine groups or a hydroxyl group, and containing multiple carboxyl groups, a polyurethane-polyurea polymer having multiple carboxyl functional groups or carboxylate salts thereof (such as sodium carboxylate) at the ends of its chain segments is obtained, thereby avoiding the destruction of the stability of the compound containing the polyurethane-polyurea polymer used for preparing gloves by metal ions from the coagulant solution during glove preparation, and simultaneously improving the mechanical properties of the prepared gloves, for example, making them have improved elongation and simultaneously have excellent tensile strength.

### Use of aqueous polyurethane-polyurea dispersions

In a third aspect, the present disclosure provides a use of the polyurethane-polyurea aqueous dispersion of the first aspect of the present disclosure or the polyurethane-polyurea aqueous dispersion prepared by the method of the second aspect of the present disclosure for preparing a slurry for flocculation-method aqueous polyurethane gloves, or for preparing polyurethane gloves.

In the present disclosure, "polyurethane glove", "polyurethane-polyurea glove", "polyurethane-polyurea polymer glove", "polyurethane-polyurea copolymer glove" have the same meaning, they all refer to a glove comprising the polyurethane-polyurea copolymer described in relation to the first aspect of the present disclosure as a constituent (for example, a constituent layer), and are used interchangeably herein.

### Polyurethane slurry

In a fourth aspect, the present disclosure provides a polyurethane slurry comprising the polyurethane-polyurea aqueous dispersion of the first aspect of the present disclosure or the polyurethane-polyurea aqueous dispersion prepared by the method of the second aspect of the present disclosure, a crosslinking agent, an optional ion chelating agent, and optionally additional water.

The additional water means water other than the water contained in the polyurethane-polyurea aqueous dispersion.

The crosslinking agent usable in the present disclosure is not particularly limited. In a preferred embodiment of the present disclosure, the crosslinking agent comprises one or more of polyfunctional aziridine, carbodiimide, amino resin, and sorbitol polyglycidyl ether.

The crosslinking agent usable in the present disclosure is not particularly limited. In one embodiment of the present disclosure, the ion chelating agent comprises one or more of sodium gluconate, sodium tartrate, disodium ethylenediaminetetraacetate, and sodium diethylenetriaminepentaacetate.

In a preferred embodiment of the present disclosure, the weight ratio of the polyurethane-polyurea aqueous dispersion, crosslinking agent, ion chelating agent and the additional water is 100 : 0.3~1.2 : 0.01~0.5 : 100~200.

For example, based on the weight of the polyurethane-polyurea aqueous dispersion being 100 parts by weight, the content of the crosslinking agent can be 0.3, 0.4, 0.5, 0.6, 0.7, 0.8, 0.9, 1.0, 1.1, 1.2 parts by weight, or a range defined by any two thereof.

For example, based on the weight of the polyurethane-polyurea aqueous dispersion being 100 parts by weight, the content of the ion chelating agent can be 0.01, 0.02, 0.05, 0.10, 0.15, 0.20, 0.25, 0.30, 0.35, 0.40, 0.45, 0.50 parts by weight, or a range defined by any two thereof.

For example, based on the weight of the polyurethane-polyurea aqueous dispersion being 100 parts by weight, the content of the additional water can be 100, 110, 120, 130, 140, 150 parts by weight, or 160 parts by weight, or 170 parts by weight, or 180 parts by weight, or 190 parts by weight, or 200 parts by weight.

### Method for Preparing Polyurethane Gloves

In a fifth aspect, the present disclosure provides a method for preparing a polyurethane glove, the method comprising a step of preparing a polyurethane layer using the slurry of the fourth aspect of the present disclosure.

In the present disclosure, "polyurethane layer", "polyurethane-polyurea layer", "polyurethane-polyurea polymer layer", "polyurethane-polyurea copolymer layer" have the same meaning, and all refer to a layer formed from the polyurethane-polyurea (copolymer) described in relation to the polyurethane-polyurea aqueous dispersion of the first aspect of the present disclosure.

In a non-limiting specific embodiment, the method of the fifth aspect of the present disclosure comprises the following steps:
S1: dipping an optionally cleaned hand former in a coagulant solution, optionally drying thereafter, to obtain a first-treated hand former;
S2: dipping the first-treated hand former in the slurry of the fourth aspect of the present disclosure, optionally drying thereafter; optionally repeating this dipping and drying process one or more times to obtain a second-treated hand former;
S3: optionally, cleaning the second-treated hand former with water, optionally drying thereafter, to obtain a third-treated hand former;
S4: optionally, dipping the second-treated hand former or the third-treated hand former in a slip coating liquid;
S5: beading, plasticizing, demolding, to obtain a polyurethane glove.

In one embodiment, the hand former is cleaned before dipping in the coagulant solution. The cleaning can be performed by known means in the art and is not particularly limited. For example, the cleaning treatment can be performed by: dipping in an acid (e.g., nitric acid) solution, then dipping in an alkali (e.g., sodium hydroxide) aqueous solution, then washing with water, and thereafter drying.

The coagulant usable in the present disclosure is not particularly limited. For example, the coagulant solution comprises a soluble salt, a release agent and water.

The soluble salt has divalent or higher valent cations, for example but not limited to: Mg²⁺, Ca²⁺, Al³⁺, etc. In a preferred embodiment, the soluble salt can be a chloride, a nitrate, etc. In a more preferred embodiment, the soluble salt can be selected from one or more of calcium nitrate, calcium chloride, magnesium nitrate, magnesium chloride, zinc nitrate and zinc chloride.

The release agent usable in the present disclosure can be any release agent known to those skilled in the art, for example calcium stearate, zinc stearate, magnesium stearate, starch, etc. The release agent can be commercially available, for example, under the designations ZK-40, LU-101.

In one embodiment of the present disclosure, the weight ratio of the soluble salt, release agent and water can be 15~30 (15, 16, 17, 18, 19, 20, 21, 22, 23, 24, 25, 26, 27, 28, 29, 30, or a range defined by any two thereof) : 8~20 (8, 9, 10, 11, 12, 13, 14, 15, 16, 17, 18, 19, 20, or a range defined by any two thereof) : 150~250 (150, 160, 170, 180, 190, 200, 210, 220, 230, 240, 250, 260, 270, 280, 290, 300, or a range defined by any two thereof).

In one embodiment, the hand former is dried after dipping in the coagulant solution.

In one embodiment, the process of dipping the first-treated hand former in the slurry of the fourth aspect of the present disclosure in step S2, optionally drying thereafter, is performed once. Alternatively, depending on the desired polyurethane layer thickness, this process can be performed multiple times (e.g., 2, 3 or more times). In one embodiment, drying is performed after dipping the first-treated hand former in the slurry of the fourth aspect of the present disclosure.

In one embodiment, step S3 may not be performed.

In one embodiment, step S3 is performed, i.e., cleaning the second-treated hand former with water, optionally drying thereafter, to obtain a third-treated hand former. In one embodiment, drying is performed after cleaning the second-treated hand former with water.

The method can optionally include a step of dipping in a slip coating liquid (to form a slip coating). When step S3 is not performed, the second-treated hand former is directly dipped in the slip coating liquid. When step S3 is performed, the third-treated hand former is dipped in the slip coating liquid. In one embodiment of the present disclosure, the slip coating liquid comprises one or more of PU coating, acrylic coating, corn starch coating, and talcum powder coating. In a preferred embodiment, the slip coating liquid is a PU coating.

In step S5, beading, plasticizing, and demolding are performed to obtain a polyurethane glove.

Beading, plasticizing, and demolding can be performed by any suitable methods known in the art and are not particularly limited.

The drying in steps S1-S3 can each be independently performed by any known method and is not particularly limited.

In one embodiment, in step S2, drying can be performed after the hand former is dipped and taken out, the drying can be performed, for example, by baking.

Baking can be performed in any equipment known to those skilled in the art, for example but not limited to a blast oven, a vacuum oven.

In a preferred embodiment of the present disclosure, when the dipping and drying process is repeated multiple times in S2, baking is performed after each dipping and taking out.

The conditions for baking can be selected according to the dipping. Preferably, the baking can be performed at a temperature of 80-150°C. For example, the baking can be performed at a temperature of 80, 90, 100, 110, 120, 130, 140, 150°C, or a range defined by any two thereof.

The plasticizing in step S5 can be performed by methods known to those skilled in the art, for example but not limited to baking. In some embodiments of the present disclosure, the plasticizing can be performed at a temperature of 110~140°C, for example at a temperature of 115°C, 120°C, 125°C, 130°C, 135°C, 140°C. The duration of plasticizing can be adjusted according to the starting materials used. In some embodiments, the plasticizing can last for 20-40 minutes, for example 20, 25, 30, 35, 40 minutes.

### Polyurethane Gloves

In a sixth aspect, the present disclosure provides a polyurethane glove comprising a polyurethane layer prepared using the slurry of the fourth aspect as a starting material.

Preferably, the polyurethane glove is prepared by the method of the fifth aspect of the present disclosure.

The glove can comprise only the polyurethane layer prepared using the slurry of the fourth aspect as a starting material. The glove can also further include other layers as desired, such as a slip coating.

By introducing polycarboxylic structures at the ends of the molecular chains of the polyurethane-polyurea polymer, the stability of the polyurethane-polyurea aqueous dispersion under high electrolyte conditions is improved. By using the polyurethane-polyurea aqueous dispersion of the present disclosure, even without adding additional metal chelating agents to the glove slurry formulation, the damaging effect of metal ions such as calcium ions from the coagulant solution on the compound containing the polyurethane-polyurea aqueous dispersion used for preparing gloves can be effectively reduced, the service life of the compound is extended, and simultaneously the mechanical properties of the prepared gloves can be improved, for example, making them have improved elongation and simultaneously have excellent tensile strength.

The applicant of the present disclosure further found that, unexpectedly, if a chelating agent is further included in the polyurethane-polyurea aqueous dispersion, the chelating agent can produce a synergistic effect with the polyurethane-polyurea molecules, further significantly extending the service life of the compound and improving the mechanical properties of the prepared gloves, for example, making them have improved elongation and simultaneously have excellent tensile strength.

### Examples

The following examples further illustrate the technical solutions provided by the present disclosure, but the present disclosure is not limited to the listed examples.

### Main starting materials

Poly(neopentyl glycol adipate) diol, OH value = 56 mg KOH/g, designation WHP205, Wanhua Chemical;
Poly(neopentyl glycol-hexanediol adipate) diol, OH value = 56 mg KOH/g, designation WHP2056, Wanhua Chemical;
Poly(methylpropanediol adipate) diol, OH value = 56 mg KOH/g, designation WHP208, Wanhua Chemical;
Poly(diethylene glycol adipate) diol, OH value = 56 mg KOH/g, WHP207, Wanhua Chemical;
Polytetramethylene ether glycol, PTMEG 2000, OH value = 56 mg KOH/g, Japan Mitsubishi Chemical;
4,4'-dicyclohexylmethane diisocyanate (HMDI), from Wanhua Chemical;
Isophorone diisocyanate (IPDI), from Wanhua Chemical;
Neopentyl glycol (NPG), from Wanhua Chemical;
Butanediol, from Sinopharm Chemical Reagent Co., Ltd.;
Triethylamine, from Sinopharm Chemical Reagent Co., Ltd.;
Ethylenediamine, from Sinopharm Chemical Reagent Co., Ltd.;
Diethanolamine, from Sinopharm Chemical Reagent Co., Ltd.;
Ethylenediaminetriacetic acid, from Sinopharm Chemical Reagent Co., Ltd.;
Dihydroxypropionic acid (DMPA), Sinopharm Chemical Reagent Co., Ltd.
Sodium gluconate, Sinopharm Chemical Reagent Co., Ltd.
Etherified amino resin crosslinking agent, Allnex Company CYMEL 385
PU coating, Stahl WF-78-923
Release agent, Zhukun ZK-40

### Characterization Methods

Average particle size Dv50: Dilute the polyurethane dispersion with water to a concentration of 0.5 wt%, measured using Malvern Nano-ZS90;
pH value: Measured using Metrohm 6173 pH meter;
-NCO determination: The -NCO content during polyurethane synthesis is determined according to the chemical industry standard HG/T2409-92 Determination of Isocyanate Group Content in Polyurethane Prepolymers.

Terminal carboxyl group content: Obtained by theoretical calculation based on starting materials.
Tensile strength: Measured using a universal testing machine (Model: GT-7005-A2LT, from Gaotie Testing Instrument (Dongguan) Co., Ltd.) at a temperature of 24-26°C and a humidity of 40-50%;
Elongation: Measured using a universal testing machine (Model: GT-7005-A2LT, from Gaotie Testing Instrument (Dongguan) Co., Ltd.) at a temperature of 24-26°C and a humidity of 40-50%;
Calcium ion content: Tested by Inductively Coupled Plasma Optical Emission Spectrometer (purchased from Thermo Fisher Scientific, USA).

### Example 1

400g WHP205, 78g IPDI, 8g DMPA (dimethylolpropionic acid) and 60g acetone were added to a 1L four-neck round-bottom flask equipped with a nitrogen inlet and outlet, and the mixture was stirred at 80°C until NCO reached 1.40 wt%. The temperature was reduced to 40°C, 330g acetone was added for dilution, 6.0g triethylamine was added for neutralization for 5 min, 900g deionized water was added under high-speed stirring for dispersion for 10 min, 3g ethylenediamine and 6.0g ethylenediaminetriacetic acid were added for post-chain extension for 15 min. After separating acetone by distillation, a solvent-free polyurethane-polyurea aqueous dispersion was obtained, the obtained polyurethane-polyurea aqueous dispersion had a solid content of 35 wt%, an average particle size of 200 nm, and a pH value of 8.3. The terminal carboxyl group content in the obtained polyurethane-polyurea was 15.35 mmol/100g (the terminal carboxyl group content is calculated relative to the total weight of the polyurethane-polyurea, the same below).

Preparing gloves using the polyurethane-polyurea aqueous dispersion prepared in the above example (polyurethane-polyurea aqueous dispersion weight 1000g):
100 parts by weight of polyurethane-polyurea aqueous dispersion, 1.2 parts by weight of etherified amino resin crosslinking agent, 0.1 parts by weight of sodium gluconate, and 100 parts by weight of deionized water were mixed, stirred for 2h, to obtain a slurry.

Pre-treating the glove former: The glove former was first cleaned in a nitric acid solution with a pH value of 3, then cleaned in an aqueous solution of sodium hydroxide with a pH value of 12, then rinsed clean, and dried in an oven at 75°C.

Preparing the coagulant solution: 18 parts by weight of calcium nitrate, 10 parts by weight of release agent and 170 parts by weight of deionized water were added to a batching tank and stirred to homogeneity to obtain a coagulant solution.

Preparing the coating solution: PU coating was added to a batching tank according to 5 parts by weight and 95 parts by weight of deionized water, stirred to homogeneity to obtain a coating aqueous solution.

The pretreated glove former was dipped in the 75°C coagulant solution for 20s, dried at 100°C, then dipped in the 25°C slurry for 10s, dried at 110°C, dipped again in the 25°C slurry for 10s, dried at 100°C, leached, dipped in the coating solution, beaded, placed in a 125°C oven, heated for 25min, and demolded to obtain a polyurethane glove.

### Example 2

450g WHP207, 125g HMDI, 16g DMPA, 2g NPG and 70g acetone were added to a 1L four-neck round-bottom flask equipped with a nitrogen inlet and outlet, and the mixture was stirred at 85°C until NCO reached 1.43 wt%. The temperature was reduced to 40°C, 477g acetone was added for dilution, then 12.0g triethylamine was added for neutralization for about 5min, then 1210g deionized water was added under high-speed stirring for dispersion for about 10min, then 2g ethylenediamine and 13g ethylenediaminetriacetic acid were added for post-chain extension for about 15min. Then after separating acetone by distillation, a solvent-free polyurethane-polyurea aqueous dispersion was obtained, the obtained polyurethane-polyurea aqueous dispersion had a solid content of 35 wt%, an average particle size of 78 nm, and a pH value of 8.7. The terminal carboxyl group content in the obtained polyurethane-polyurea was 26.82 mmol/100g.

Preparing gloves using the polyurethane-polyurea aqueous dispersion prepared in the above example (polyurethane-polyurea aqueous dispersion weight 1000g):
100 parts by weight of polyurethane-polyurea aqueous dispersion, 1.0 parts by weight of amino resin crosslinking agent, 0.3 parts by weight of sodium gluconate, and 120 parts by weight of deionized water were mixed, stirred for 2h, to obtain a slurry.

Pre-treating the glove former: The glove former was first cleaned in a nitric acid solution with a pH value of 3, then cleaned in an aqueous solution of sodium hydroxide with a pH value of 12, then rinsed clean, and dried in an oven at 75°C.

Preparing the coagulant solution: 20 parts by weight of calcium nitrate, 15 parts by weight of release agent and 200 parts by weight of deionized water were added to a batching tank and stirred to homogeneity to obtain a coagulant solution.

Preparing the coating solution: PU coating was added to a batching tank according to 5 parts by weight and 95 parts by weight of deionized water, stirred to homogeneity to obtain a coating aqueous solution.

The pretreated glove former was dipped in the 75°C coagulant solution for 20s, dried at 100°C, then dipped in the 25°C slurry for 10s, dried at 100°C, dipped again in the 25°C slurry for 10s, dried at 100°C, leached, dipped in the coating solution, beaded, placed in a 135°C oven, heated for 30min, and demolded to obtain a polyurethane glove.

### Example 3

428g WHP2056, 69g IPDI, 45g HMDI, 10g DMPA and 3.5g butanediol, 80g acetone were added to a 1L four-neck round-bottom flask equipped with a nitrogen inlet and outlet, and the mixture was stirred at 80°C until NCO reached 2.04 wt%. The temperature was reduced to 40°C, 449g acetone was added for dilution, then 7.55g triethylamine was added for neutralization for about 5min, then 1141g deionized water was added under high-speed stirring for dispersion for about 10min, then 6g ethylenediamine and 1.2g ethylenediaminetriacetic acid were added for post-chain extension for about 15min. Then after separating acetone by distillation, a solvent-free polyurethane-polyurea aqueous dispersion was obtained, the obtained polyurethane-polyurea aqueous dispersion had a solid content of 35 wt%, an average particle size of 169 nm, and a pH value of 8.3. The terminal carboxyl group content in the obtained polyurethane-polyurea was 13.46 mmol/100g.

Preparing gloves using the polyurethane-polyurea aqueous dispersion prepared in the above example (polyurethane-polyurea aqueous dispersion weight 1000g):
100 parts by weight of polyurethane-polyurea aqueous dispersion, 0.8 parts by weight of etherified amino resin crosslinking agent, 0.3 parts by weight of sodium gluconate, and 130 parts by weight of deionized water were mixed, stirred for 2h, to obtain a slurry.

Pre-treating the glove former: The glove former was first cleaned in a nitric acid solution with a pH value of 3, then cleaned in an aqueous solution of sodium hydroxide with a pH value of 12, then rinsed clean, and dried in an oven at 75°C.

Preparing the coagulant solution: 22 parts by weight of calcium nitrate, 11 parts by weight of release agent and 200 parts by weight of deionized water were added to a batching tank and stirred to homogeneity to obtain a coagulant solution.

Preparing the coating solution: Talcum powder was added to a batching tank according to 5 parts by weight and 95 parts by weight of deionized water, stirred to homogeneity to obtain a coating aqueous solution.

The pretreated glove former was dipped in the 75°C coagulant solution for 20s, dried at 100°C, then dipped in the 25°C slurry for 10s, dried at 120°C, dipped again in the 25°C slurry for 10s, dried at 120°C, leached, dipped in the coating solution, beaded, placed in a 130°C oven, heated for 35min, and demolded to obtain a polyurethane glove.

### Example 4

500g PTMEG2000, 107g IPDI, 13g DMPA and 78g acetone were added to a 1L four-neck round-bottom flask equipped with a nitrogen inlet and outlet, and the mixture was stirred at 80°C until NCO reached 1.61 wt%. The temperature was reduced to 40°C, 548g acetone was added for dilution, then 8.8g triethylamine was added for neutralization for about 5min, then 1270g deionized water was added under high-speed stirring for dispersion for about 10min, then 6g ethylenediamine and 4.5g ethylenediaminetriacetic acid were added for post-chain extension for about 15min. Then after separating acetone by distillation, a solvent-free polyurethane-polyurea aqueous dispersion was obtained, the obtained polyurethane-polyurea aqueous dispersion had a solid content of 35 wt%, an average particle size of 109 nm, and a pH value of 8.5. The terminal carboxyl group content in the obtained polyurethane-polyurea was 9.10 mmol/100g.

Preparing gloves using the polyurethane-polyurea aqueous dispersion prepared in the above example (polyurethane-polyurea aqueous dispersion weight 1000g):
100 parts by weight of polyurethane-polyurea aqueous dispersion, 0.9 parts by weight of amino resin crosslinking agent, 0.2 parts by weight of sodium gluconate, and 100 parts by weight of deionized water were mixed, stirred for 2h, to obtain a slurry.

Pre-treating the glove former: The glove former was first cleaned in a nitric acid solution with a pH value of 3, then cleaned in an aqueous solution of sodium hydroxide with a pH value of 12, then rinsed clean, and dried in an oven at 75°C.

Preparing the coagulant solution: 21 parts by weight of calcium nitrate, 15 parts by weight of release agent and 223 parts by weight of deionized water were added to a batching tank and stirred to homogeneity to obtain a coagulant solution.

Preparing the coating solution: PU coating was added to a batching tank according to 5 parts by weight and 95 parts by weight of deionized water, stirred to homogeneity to obtain a coating aqueous solution.

The pretreated glove former was dipped in the 75°C coagulant solution for 20s, dried at 100°C, then dipped in the 25°C slurry for 10s, dried at 100°C, dipped again in the 25°C slurry for 10s, dried at 100°C, leached, dipped in the coating solution, beaded, placed in a 125°C oven, heated for 25min, and demolded to obtain a polyurethane glove.

### Example 5

In this example, the chelating agent sodium gluconate was not added to the glove.

500g PTMEG2000, 107g IPDI, 13g DMPA and 78g acetone were added to a 1L four-neck round-bottom flask equipped with a nitrogen inlet and outlet, and the mixture was stirred at 80°C until NCO reached 1.61 wt%. The temperature was reduced to 40°C, 548g acetone was added for dilution, then 8.8g triethylamine was added for neutralization for about 5min, then 1270g deionized water was added under high-speed stirring for dispersion for about 10min, then 6g ethylenediamine and 4.5g ethylenediaminetriacetic acid were added for post-chain extension for about 15min. Then after separating acetone by distillation, a solvent-free polyurethane-polyurea aqueous dispersion was obtained, the obtained polyurethane-polyurea aqueous dispersion had a solid content of 35 wt%, an average particle size of 109 nm, and a pH value of 8.5. The terminal carboxyl group content in the obtained polyurethane-polyurea was 9.10 mmol/100g.

Preparing gloves using the polyurethane-polyurea aqueous dispersion prepared in the above example (polyurethane-polyurea aqueous dispersion weight 1000g):
100 parts by weight of polyurethane-polyurea aqueous dispersion, 0.9 parts by weight of amino resin crosslinking agent, and 100 parts by weight of deionized water were mixed, stirred for 2h, to obtain a slurry.

Pre-treating the glove former: The glove former was first cleaned in a nitric acid solution with a pH value of 3, then cleaned in an aqueous solution of sodium hydroxide with a pH value of 12, then rinsed clean, and dried in an oven at 75°C.

Preparing the coagulant solution: 21 parts by weight of calcium nitrate, 15 parts by weight of release agent and 223 parts by weight of deionized water were added to a batching tank and stirred to homogeneity to obtain a coagulant solution.

Preparing the coating solution: PU coating was added to a batching tank according to 5 parts by weight and 95 parts by weight of deionized water, stirred to homogeneity to obtain a coating aqueous solution.

The pretreated glove former was dipped in the 75°C coagulant solution for 20s, dried at 100°C, then dipped in the 25°C slurry for 10s, dried at 100°C, dipped again in the 25°C slurry for 10s, dried at 100°C, leached, dipped in the coating solution, beaded, placed in a 125°C oven, heated for 25min, and demolded to obtain a polyurethane glove.

### Comparative Example 1

The ethylenediaminetriacetic acid in Example 1 was replaced with an equimolar amount of diethanolamine, the rest remained unchanged. The obtained polyurethane-polyurea aqueous dispersion had a solid content of 35 wt%, an average particle size of 207 nm, a pH value of 8.3, and the terminal carboxyl group content in the obtained polyurethane-polyurea was 0 mmol/100g.

Preparing gloves using the polyurethane-polyurea aqueous dispersion prepared in the above example (polyurethane-polyurea aqueous dispersion weight 1000g):
100 parts by weight of polyurethane-polyurea aqueous dispersion, 3 parts by weight of amino resin crosslinking agent, and 100 parts by weight of deionized water were mixed, stirred for 2h, to obtain a slurry.

Pre-treating the glove former: The glove former was first cleaned in a nitric acid solution with a pH value of 3, then cleaned in an aqueous solution of sodium hydroxide with a pH value of 12, then rinsed clean, and dried in an oven at 75°C.

Preparing the coagulant solution: 12 parts by weight of calcium nitrate, 10 parts by weight of release agent and 170 parts by weight of deionized water were added to a batching tank and stirred to homogeneity to obtain a coagulant solution.

Preparing the coating solution: PU coating was added to a batching tank according to 5 parts by weight and 95 parts by weight of deionized water, stirred to homogeneity to obtain a coating aqueous solution.

The pretreated glove former was dipped in the 75°C coagulant solution for 20s, dried at 100°C, then dipped in the 25°C slurry for 10s, dried at 100°C, dipped again in the 25°C slurry for 10s, dried at 100°C, leached, dipped in the coating solution, beaded, placed in a 125°C oven, heated for 25min, and demolded to obtain a polyurethane glove.

### Comparative Example 2

Half the molar amount of ethylenediaminetriacetic acid in Example 4 was replaced with an equimolar amount of diethanolamine.

500g PTMEG2000, 107g IPDI, 13g DMPA and 78g acetone were added to a 1L four-neck round-bottom flask equipped with a nitrogen inlet and outlet, and the mixture was stirred at 80°C until NCO reached 1.61 wt%. The temperature was reduced to 40°C, 548g acetone was added for dilution, then 8.8g triethylamine was added for neutralization for about 5min, then 1270g deionized water was added under high-speed stirring for dispersion for about 10min, then 6g ethylenediamine, 2.25g ethylenediaminetriacetic acid and 1.0g diethanolamine were added for post-chain extension for about 15min. Then after separating acetone by distillation, a solvent-free polyurethane-polyurea aqueous dispersion was obtained, the obtained polyurethane-polyurea aqueous dispersion had a solid content of 35 wt%, an average particle size of 109 nm, a pH value of 8.5, and the terminal carboxyl group content in the obtained polyurethane-polyurea was 4.55 mmol/100g.

Preparing gloves using the polyurethane-polyurea aqueous dispersion prepared in the above example (polyurethane-polyurea aqueous dispersion weight 1000g):
100 parts by weight of polyurethane-polyurea aqueous dispersion, 3 parts by weight of amino resin crosslinking agent, 0.05 parts by weight of sodium gluconate, and 100 parts by weight of deionized water were mixed, stirred for 2h, to obtain a slurry.

Pre-treating the glove former: The glove former was first cleaned in a nitric acid solution with a pH value of 3, then cleaned in an aqueous solution of sodium hydroxide with a pH value of 12, then rinsed clean, and dried in an oven at 75°C.

Preparing the coagulant solution: 21 parts by weight of calcium nitrate, 15 parts by weight of release agent and 223 parts by weight of deionized water were added to a batching tank and stirred to homogeneity to obtain a coagulant solution.

Preparing the coating solution: PU coating was added to a batching tank according to 5 parts by weight and 95 parts by weight of deionized water, stirred to homogeneity to obtain a coating aqueous solution.

The pretreated glove former was dipped in the 75°C coagulant solution for 20s, dried at 100°C, then dipped in the 25°C slurry for 10s, dried at 100°C, dipped again in the 25°C slurry for 10s, dried at 100°C, leached, dipped in the coating solution, beaded, placed in a 125°C oven, heated for 25min, and demolded to obtain a polyurethane glove.

### Comparative Example 3

Example 4 was repeated, the only difference being that ethylenediaminetriacetic acid was replaced with an equimolar amount of diethanolamine.

### Comparative Example 4

Example 5 was repeated, the only difference being that ethylenediaminetriacetic acid was replaced with an equimolar amount of diethanolamine.

### Glove Performance Testing:

On the palm portion of the prepared polyurethane gloves, samples were cut according to ASTM D412 standard, and the tensile strength and elongation of the cut samples were tested, while the calcium ion content in the prepared latex was tested when gloves were continuously made by dipping 200 times. The test results are shown in Table 1.

**Table 1. Performance Test Results**

| | Tensile Strength/MPa | Elongation/% | Calcium ion content/ppm |
|---|---|---|---|
| Example 1 | 50 | 580 | 40 |
| Example 2 | 49 | 555 | 21 |
| Example 3 | 52 | 550 | 62 |
| Example 4 | 50 | 590 | 80 |
| Example 5 | 51 | 587 | 92 |
| Comparative Example 1 | 40 | 700 | 489 |
| Comparative Example 2 | 42 | 710 | 232 |
| Comparative Example 3 | 51 | 540 | 440 |
| Comparative Example 4 | 50 | 580 | 330 |

From Table 1 above, it can be seen that the presence of terminal polycarboxylic structures in the polyurethane-polyurea aqueous dispersion and the introduction of metal ion chelating agents in the glove formulation can effectively reduce the enrichment of calcium ions in the compound, improve the stability of the latex during continuous operation of the production line, and simultaneously improve the strength of the gloves.

In addition, comparing Examples 4-5 and Comparative Example 3 with Comparative Example 4 respectively, it can be found that:
- In terms of composition, the difference between Example 4 and Comparative Example 4 is equivalent to the sum of (the difference between Example 5 and Comparative Example 4) and (the difference between Comparative Example 3 and Comparative Example 4).
- The difference between Example 5 and Comparative Example 4 is that the polyurethane-polyurea polymer of Example 5 contains terminal carboxyl groups, but there is no additionally added metal ion chelating agent in the polyurethane-polyurea aqueous dispersion. The results in Table 3 show that compared with Comparative Example 4, Example 5 has unchanged tensile strength, an elongation increase of 7%, and a calcium ion reduction amount of 238 ppm in the compound.
- The difference between Comparative Example 3 and Comparative Example 4 is that the polyurethane-polyurea polymer of Comparative Example 3 does not contain terminal carboxyl groups, but there is an additionally added metal ion chelating agent in the polyurethane-polyurea aqueous dispersion. The results in Table 3 show that compared with Comparative Example 4, Example 4 has basically unchanged tensile strength, an elongation increase of -40%, and a calcium ion reduction amount of -110 ppm in the compound.
- The difference between Example 4 and Comparative Example 4 is that the polyurethane-polyurea polymer of Example 4 contains terminal carboxyl groups, and there is an additionally added metal ion chelating agent in the polyurethane-polyurea aqueous dispersion. The results in Table 3 show that compared with Comparative Example 4, Example 4 has basically unchanged tensile strength, an elongation increase of 10%, and a calcium ion reduction amount of 250 ppm in the compound, both of which are respectively higher than the sum of the change value of Example 5 relative to Comparative Example 4 and the change value of Comparative Example 3 relative to Comparative Example 4.

Thus, it can be seen that when using a polyurethane-polyurea containing terminal carboxyl groups in combination with an additional metal chelating agent, the effect of the combination of the terminal carboxyl groups and the metal chelating agent on increasing the product elongation and reducing the calcium ions in the compound is greater than the sum of the technical effects produced by the terminal carboxyl groups alone and the metal chelating agent alone.

Therefore, in the polyurethane-polyurea aqueous dispersion of the present disclosure, the terminal carboxyl or carboxylate groups of the polyurethane-polyurea polymer and the additionally added metal chelating agent achieve a synergistic effect in terms of improving the elongation of the product and reducing the calcium ion content in the latex, and while achieving this synergistic effect, the tensile strength of the product is not affected. Thus, the present disclosure avoids the destruction of the stability of the compound by metal ions, and simultaneously improves the mechanical properties of the prepared gloves, for example, making them have improved elongation and simultaneously have excellent tensile strength.

The above are only exemplary embodiments of the present disclosure and are not intended to limit the protection scope of the present disclosure, which is determined by the appended claims.

## Claims

1. A polyurethane-polyurea aqueous dispersion, **characterized in that** the polyurethane-polyurea aqueous dispersion comprises a polyurethane-polyurea having terminal polycarboxylic acid and/or carboxylate groups dispersed in water.

2. The polyurethane-polyurea aqueous dispersion according to claim 1, **characterized in that**, relative to the total weight of the polyurethane-polyurea, the content of the terminal polycarboxylic acid and/or carboxylate groups is 7-30 mmol/100g, for example 9 to 27 mmol/100g.

3. The polyurethane-polyurea aqueous dispersion according to any one of claims 1-2, **characterized in that** the polyurethane-polyurea is prepared by reacting starting materials comprising the following components:
component a: one or more polyether or polyester polyols, the number average molecular weight of the polyether or polyester polyols being 500 g/mol or more;
component b: one or more polyisocyanates;
component c: one or more hydrophilic compounds, the hydrophilic compounds containing 2-3 groups having reactivity with NCO, the hydrophilic groups of the hydrophilic compounds including ionic groups and/or latent ionic groups;
optionally, component d: one or more alcohol chain extenders different from component a, having a number average molecular weight of 300 g/mol or less;
component e: one or more compounds that ionize the latent ionic groups in component c, having the structural formula R₁R₂R₃N, wherein R₁-R₃ are the same or different from each other, and are each independently selected from H, or unsubstituted or OH-substituted C1-C6 alkyl, C2-C6 alkenyl, C2-C6 alkynyl, or C5-C6 cycloalkyl;
component f: one or more polyamines containing at least two amine groups selected from primary amine groups and/or secondary amine groups, having a number average molecular weight of 500 g/mol or less;
component g: one or more compounds reactive with isocyanate, containing a single amine group selected from primary amine groups or secondary amine groups or a hydroxyl group, and containing multiple carboxyl groups;
wherein the terminal polycarboxylic acid and/or carboxylate groups in the polyurethane-polyurea are introduced by component g.

4. The polyurethane-polyurea aqueous dispersion according to any one of claims 1-3, **characterized in that**,
- the component a is one or more of diols, triols, and tetraols, preferably diols, preferably the number average molecular weight of component a is 500 to 6000 g/mol, for example 500 to 5000 g/mol; and/or
- the component b is one or more of aromatic, aliphatic, and alicyclic polyisocyanates having at least two, preferably two isocyanate groups; and/or
- the component c is one or more selected from dimethylolpropionic acid, dimethylolbutyric acid, and aminosulfonates, more preferably dimethylolpropionic acid; and/or
- the component d is selected from one or more of ethylene glycol, 1,2-propanediol, 1,3-propanediol, 1,4-butanediol, 1,3-butanediol, 2,3-butanediol, 1,5-pentanediol, 1,6-hexanediol, neopentyl glycol, 1,4-dihydroxycyclohexane, 1,4-dimethylolcyclohexane, 1,8-octanediol, 1,10-decanediol, 1,12-dodecanediol, neopentyl glycol, 1,4-cyclohexanediol, 1,4-cyclohexanedimethanol and 2-ethyl-1.3-hexanediol; preferably component d is selected from one or more of 1,2-propanediol, 1,3-propanediol, 1,4-butanediol, 1,3-butanediol, neopentyl glycol and 1,4-cyclohexanedimethanol; and/or
- the component e is an organic tertiary amine, for example triethylamine, dimethylethanolamine, triisopropylamine, or ammonia, preferably component e is triethylamine; and/or
- the component f is a polyamine having a number average molecular weight of 60~500 g/mol, preferably component f is selected from one or more of ethylenediamine, 1,2-diaminopropane, 1,4-diaminobutane, 1,6-hexanediamine, 2-methyl-1,5-diamine, isophoronediamine, 4,4-diaminodicyclohexylmethane, piperazine and diethylenetriamine, more preferably component f is ethylenediamine and/or isophoronediamine; and/or
- the component g has a carboxyl number of 2 or more, for example 3 or more, preferably component g is ethylenediaminetriacetic acid.

5. The polyurethane-polyurea aqueous dispersion according to any one of claims 1-4, **characterized in that**, based on the total weight of components a-g being 100%, the proportions by weight of components a-g are as follows:
Component a: 72-85 wt%;
Component b: 10-23 wt%;
Component c: 1.5-4 wt%;
Component d: 0-3 wt%;
Component e: 0.1-3 wt%;
Component f: 0-3 wt%;
Component g: 0.4-2.5 wt%.

6. The polyurethane-polyurea aqueous dispersion according to any one of claims 1-5, **characterized in that** the content of the polyurethane-polyurea in the polyurethane-polyurea aqueous dispersion is 35 wt% or more, based on the total weight of the polyurethane-polyurea aqueous dispersion.

7. A method for preparing the polyurethane-polyurea aqueous dispersion according to any one of claims 1-6, **characterized in that** the preparation method comprises preparing the polyurethane-polyurea by:
reacting a prepolymer containing terminal isocyanate groups, preferably at least two terminal isocyanate groups, with a polyamine containing at least two amine groups selected from primary amine groups and/or secondary amine groups, and with a compound reactive with isocyanate, containing a single amine group selected from primary amine groups or secondary amine groups or a hydroxyl group, and containing multiple carboxyl groups.

8. The method according to claim 7, **characterized in that** the preparation method comprises the following steps:
- reacting component a, component b, component c, optional component d in a first inert solvent to obtain a prepolymer containing terminal isocyanate groups, preferably at least two terminal isocyanate groups;
- optionally adding a second inert solvent for dilution;
- adding component e for neutralization, then adding water and uniformly dispersing to obtain a dispersion containing inert solvent;
- adding components f and g to the dispersion containing inert solvent and continuing the reaction;
- removing the inert solvent to obtain a polyurethane-polyurea aqueous dispersion free of inert solvent;
- optionally, converting the terminal carboxyl groups in the polyurethane-polyurea into carboxylate groups,
wherein the second inert solvent is the same as or different from the first inert solvent.

9. The method according to claim 7 or 8, **characterized in that** the step of converting the terminal carboxyl groups in the polyurethane-polyurea into carboxylate groups is carried out by: adding an alkaline compound to the polyurethane-polyurea aqueous dispersion free of inert solvent, the alkaline compound preferably being an alkali metal compound, more preferably sodium hydroxide and/or sodium carbonate.

10. Use of the polyurethane-polyurea aqueous dispersion according to any one of claims 1-6, or the polyurethane-polyurea aqueous dispersion prepared by the method according to any one of claims 7-9, for preparing a slurry for flocculation-method aqueous polyurethane gloves, or for preparing polyurethane gloves.

11. A slurry comprising the polyurethane-polyurea aqueous dispersion according to any one of claims 1-6 or prepared by the preparation method according to any one of claims 7-9, a crosslinking agent, an optional ion chelating agent, and optionally additional water.

12. The slurry according to claim 11, **characterized in that** the crosslinking agent comprises one or more of polyfunctional aziridine, carbodiimide, amino resin, and sorbitol polyglycidyl ether;
and/or, the ion chelating agent comprises one or more of sodium gluconate, sodium tartrate, disodium ethylenediaminetetraacetate, and sodium diethylenetriaminepentaacetate;
preferably, the weight ratio of the polyurethane-polyurea aqueous dispersion, crosslinking agent, ion chelating agent and the additional water is 100 : 0.3~1.2 : 0.01~0.5 : 100~200.

13. A method for preparing a polyurethane glove comprising a polyurethane layer, **characterized in that** the method comprises a step of preparing the polyurethane layer using the slurry according to any one of claims 11-12.

14. The method according to claim 13, wherein the method comprises the following steps:
S1: dipping an optionally cleaned hand former in a coagulant solution, optionally drying thereafter, to obtain a first-treated hand former;
S2: dipping the first-treated hand former in the slurry according to any one of claims 11-12, optionally drying thereafter; optionally repeating this dipping and drying process one or more times to obtain a second-treated hand former;
S3: optionally, cleaning the second-treated hand former with water, optionally drying thereafter, to obtain a third-treated hand former;
S4: optionally, dipping the second-treated hand former or the third-treated hand former in a slip coating liquid;
S5: beading, plasticizing, demolding, to obtain a polyurethane glove.

15. The method according to claim 14, **characterized in that** the coagulant solution comprises a soluble salt, a release agent, and water;
preferably, the soluble salt is selected from one or more of calcium nitrate, calcium chloride, magnesium nitrate, magnesium chloride, zinc nitrate and zinc chloride;
preferably, the weight ratio of the soluble salt, release agent, and water is 15~30 : 8~20 : 150~250;
and/or, the slip coating liquid comprises one or more of PU coating, acrylic coating, corn starch coating, and talcum powder coating;
and/or, the dipping and drying process in step S2 is performed at least twice, and the drying in step S2 is baking; preferably, the baking temperature is 80-150°C, preferably 90~140°C;
and/or, the plasticizing in step S5 is performed by baking at a temperature of 110~140°C for 20~40 min.

16. A polyurethane glove comprising a polyurethane layer prepared using the slurry according to claim 11 or 12 as a starting material, preferably the glove is obtained by the method according to any one of claims 13-15.
